# EUROPÄISCHE PATENTSCHRIFT

(11) **EP 2 024 720 B1**
(45) Veröffentlichungstag und Bekanntmachung des Hinweises auf die Patenterteilung: **26.07.2017**
(21) Anmeldenummer: 07722447.5
(22) Anmeldetag: 15.05.2007
(51) Int. Cl.: G01K 1/14

(54) **SENSORANORDNUNG**
SENSOR ASSEMBLY
DISPOSITIF DÉTECTEUR

(30) Priorität: 30.05.2006 DE 102006025179
(43) Veröffentlichungstag der Anmeldung: 18.02.2009
(73) Patentinhaber: EPCOS AG, 81669 München (DE)
(72) Erfinder: KLOIBER, Gerald, A-8073 Feldkirchen (AT); STRALLHOFER, Heinz, A-8530 Deutschlandsberg (AT); MAYER, Ralf Thomas, 73434 Aalen (DE)
(74) Vertreter: Epping - Hermann - Fischer
(86) Internationale Anmeldenummer: PCT/DE2007/000899
(87) Internationale Veröffentlichungsnummer: WO 2007/137552

(56) Entgegenhaltungen:
- WO-A-99/40401
- DE-A1- 10 250 196
- DE-A1-102004 047 725
- DE-U1- 20 208 698
- GB-A- 2 164 150

## Beschreibung

Es wird eine zur Temperaturmessung geeignete Sensoranordnung mit einem Messkopf angegeben, dessen Arbeitsprinzip auf einem temperaturabhängigen Widerstand des Thermistors basiert.

Aus der Druckschrift DE 103 58 778 A1 und DE 102004047725 A1 ist ein Temperatursensor bekannt. Die DE 10250196 zeigt einen Detektor für einen Röntgen-Computertomographen mit einem Bügel zur Befestigung einer beispielsweise schlauchförmigen Andrückvorrichtung. Die GB 2164150 zeigt Abschirmungen für Fühler in einer Kocheinheit. Die WO 99/40401 betrifft eine Messvorrichtung zur Temperaturmessung an bewegten Maschinenteilen. DE 202 08 698 U1 beschreibt einen Temperatur-Anlegesensor mit einem thermoelektrischen Wandlerelement, das in einem Silikonkautschukblock eingebettet ist und welcher Sensor zur Erfassung der Oberflächentemperatur von Rohrleitungen verwendet werden kann. Eine zu lösende Aufgabe besteht darin, eine Sensoranordnung anzugeben, die eine genaue Temperaturmessung an einem Rohr zulässt. Diese Aufgabe wird durch die Sensoranordnung nach Anspruch 1 gelöst. Der Messkopf ist an der Innenfläche der Halterung befestigt. Im Innenraum der Halterung ist ein Abschnitt eines Rohrs angeordnet, an das der Messkopf thermisch angekoppelt ist. Die Halterung umfasst den Rohrabschnitt.

Der Messkopf umfasst ein Fühlelement (Sensor) zur Erfassung der Temperatur des Rohrs. Der Messkopf ist zumindest an einen Teil des Rohrumfangs thermisch angekoppelt. Der Messkopf umfasst außerdem einen Verbund aus zwei flexiblen Kunststofffolien, zwischen denen das Fühlelement angeordnet ist, sowie metallische Leiterbahnen, über die das Fühlelement kontaktierbar ist und die in einer vorteilhaften Variante zumindest teilweise zwischen den beiden Kunststofffolien angeordnet sind. Die Leiterbahnen können aber auch in einer Innenlage einer der Kunststofffolien integriert sein.

Mit der angegebenen Sensoranordnung ist eine gute und relativ großflächige Ankopplung zum Rohr gewährleistet. Dadurch, dass Leiterbahnen das Rohr zumindest teilweise umgeben, kann über die Leiterbahnen die Temperaturmittelung in Umfangsrichtung des Rohres erfolgen.

Ein flexibler, d. h. biegbarer Messkopf hat den Vorteil, dass er leicht an den Umfang des Rohrs anpassbar ist.

Der Messkopf hat eine flächige Anbindung an die zu messende Oberfläche. Der Messkopf kontaktiert zumindest 20% des Rohrumfangs. Der Messkopf kontaktiert in einer Variante zumindest 30% des Rohrumfangs. Der Messkopf kontaktiert in einer weiteren Variante zumindest 50% des Rohrumfangs. Es ist besonders vorteilhaft, wenn der Umschlingungswinkel des Messkopfs um das Rohr zumindest 270° beträgt. Das Innere des Rohrs ist vorzugsweise mediumdurchströmt. Beispielsweise kann durch das Rohr eine Flüssigkeit oder ein Gas strömen.

Die Sensoranordnung umfasst vorzugsweise eine am Rohr zu montierende Halterung. Der Messkopf ist zwischen der Halterung und dem Rohr angeordnet und wird durch die Halterung an das Rohr angepresst oder an das Rohr angeklebt.

Die Halterung weist vorzugsweise Federeigenschaften auf. Sie ist vorzugsweise zumindest teilweise biegbar.

Die Halterung weist vorzugsweise Vorsprünge auf, die den Messkopf kontaktieren. Die Vorsprünge sind vorzugsweise schmal und erstrecken sich in die Längsrichtung des Rohres z. B. parallel zueinander. Die Vorsprünge können sich aber auch in Umfangsrichtung erstrecken. Die Vorsprünge können auch eine netzartige Struktur bilden. Die außerhalb der Vorsprünge liegenden Bereiche der Halterung sind vom Messkopf beabstandet, so dass zwischen diesen Bereichen und dem Messkopf ein Luftspalt angeordnet ist.

Die Halterung ist vorzugsweise um das Rohr klappbar. Die Halterung weist vorzugsweise zueinander komplementäre Rastelemente auf, die das Aufklappen der Halterung verhindern. Die Halterung kann beispielsweise eine zusammendrückbare Ausbeulung aufweisen, die wie eine Scharniervorrichtung wirkt. Die Ausbeulung ist vorzugsweise nach außen gewandt bzw. vom Rohr abgewandt. Es kann vorteilhaft sein, die Wandstärke der Halterung zumindest in einem Bereich der Ausbeulung dünner auszubilden als bei den übrigen Bereichen der Halterung.

Die Halterung kann wie ein Gehäuse für den Messkopf konzipiert sein. Die Halterung kann z. B. die Form einer Scheibe beliebigen Querschnitts mit ausgehöhltem Inneren aufweisen, durch die das Rohr durchgeführt ist. Zwischen der Halterung und dem Rohr ist ein Hohlraum angeordnet, in dem der Messkopf angeordnet ist. Zwischen der stirnseitigen Wandung der Halterung und dem Rohr ist vorzugsweise eine Dichtung - z.B. ein Gummiring pro Stirnseite - zur Abdichtung des Hohlraums angeordnet.

Die Halterung sorgt vor allem für die Befestigung des Messkopfs an das Rohr und schützt den Messkopf u. a. vor mechanischen Einwirkungen. Eine als Gehäuse ausgeführte Halterung hat den Vorteil, dass der Messkopf vor den thermischen und für den Messkopf schädlichen Einflüssen der Umgebung geschützt ist.

Durch die Halterung sind Anschlussleitungen zur Kontaktierung des Fühlelements durchgeführt. Die Anschlussleitungen können z. B. Kabel umfassen, die elektrisch mit den Leiterbahnen des Messkopfs verbunden sind. Die Verbindungsstelle kann im Hohlraum angeordnet sein.

In einer Wand der Halterung kann alternativ eine Steckverbindung integriert sein, an die einerseits die von außen nicht zugänglichen Leiterbahnen angelötet und andererseits von außen zugängliche externe Anschlussleitungen anschließbar sind.

Das Material der Leiterbahnen weist vorzugsweise auch eine hohe Wärmeleitfähigkeit auf.

Die Halterung kann zumindest eine Lage aus einem thermoisolierenden Material umfassen. Als thermoisolierende Materialien sind insbesondere poröse Materialien wie Schaumstoffe geeignet. Auch andere üblicherweise zur Thermoisolation verwendete Materialien kommen in Betracht. Alternativ kann ein Material mit thermoisolierenden Eigenschaften in den Hohlräumen angeordnet sein, die zwischen der Halterung und dem Rohr gebildet sind. Möglich ist es auch, um die Sensoranordnung eine Wärmeisolationsschicht mit den vorstehend genannten Eigenschaften zu wickeln, um die Wärmeentkopplung von der Umgebung weiter zu verbessern.

Das Fühlelement basiert auf einem temperaturabhängig veränderbaren Widerstand. Es kann z. B. ein NTC- oder PTC-Element sein. PTC steht für Positive Temperature Coefficient und NTC für Negative Temperature Coefficient. Ein NTC-Element weist bei zunehmender Temperatur einen abnehmenden Widerstand und ein PTC-Element einen zunehmenden Widerstand auf. Ein PTC-Element kann aus beliebigen leitenden und halbleitenden Materialien gefertigt sein. Ein NTC-Element umfasst vorzugsweise ein Keramikmaterial mit NTC-Eigenschaften.

Das zumindest eine Fühlelement kann mehrere in Serie geschaltete Fühlelemente umfassen. Das Fühlelement kann aber auch unabhängig voneinander kontaktierbare Fühlelemente mit zwei Leiterbahnen pro Fühlelement umfassen.

Die Leiterbahnen können in einer Variante als Metallkaschierungen (vorzugsweise Kupferkaschierungen) der Kunststofffolien ausgeführt sein. Es können aber auch flexible Metallfolien sein, die zusammen mit dem Fühlelement zwischen den beiden Folien eingeschlossen sind.

Im Folgenden werden Ausführungsbeispiele einer Sensoranordnung und des flexiblen Messkopfs anhand von schematischen und nicht maßstabgetreuen Figuren erläutert. Es zeigen:
Figur 1 im Querschnitt quer zum Rohr eine Sensoranordnung mit einem flexiblen Messkopf und einer klappbaren Halterung;
Figur 2 in Längsschnitt die Sensoranordnung gemäß der Figur 1;
Figur 3A den schematischen Aufbau des flexiblen Messkopfs vor dem Verkapseln des Fühlelements;
Figur 3B den schematischen Aufbau des flexiblen Messkopfs nach dem Verkapseln des Fühlelements;
Figur 4 den Querschnitt einer Sensoranordnung, bei der die erste und die zweite Folie mehrere Schichten aufweist;
Figur 5 den Querschnitt einer weiteren Sensoranordnung mit in der ersten Folie verborgenen Leiterbahnen und abschirmenden Teilschichten;
Figur 6 die Ansicht der Sensoranordnung gemäß Figur 4 von oben.

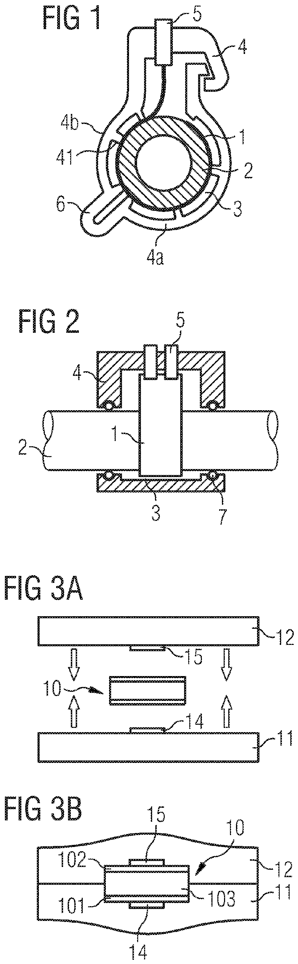

Figur 1 zeigt eine beispielhafte Sensoranordnung, die ein Rohr 2 mit einer Flüssigkeit und einen um dieses Rohr gewickelten flexiblen Messkopf 1 umfasst, der in Figuren 3A, 3B näher erläutert ist. Der Messkopf 1 ist zwischen dem Rohr und einer Halterung 4 angeordnet. Der Messkopf 1 ist an das Rohr 2 in einem relativ großflächigen Ankoppelbereich thermisch angekoppelt.

Die Halterung 4 kann in einem Stück, z. B. wie eine Schelle ausgeführt sein. Die Halterung 4 ist vorzugsweise klappbar. Zu diesem Zweck ist eine Scharniervorrichtung 6 vorgesehen, die Teile 4a, 4b der Halterung 4 miteinander verbindet. Die in Figur 1 gezeigte Scharniervorrichtung 6 stellt eine Ausbeulung der Mantelfläche der Halterung 4 dar. Diese Scharniervorrichtung ist also in einem Stück mit den gegeneinander klappbaren Teilen 4a, 4b der Halterung 4 ausgebildet.

Die Teile der Halterung 4 können aber auch als voneinander trennbare Halbschalen ausgeführt sein, die miteinander rastbar sind.

Vorzugsweise in der Mantelfläche der Halterung ist eine Leitungsdurchführung 5 vorzugsweise in Form einer Steckverbindung eingebaut. Durch die Leitungsdurchführung 5 sind elektrische Zuleitungen durchgeführt, die die Leiterbahnen 14, 15 umfassen oder mit diesen verlötet oder verschweißt sind. Die Leiterbahnen 14, 15 können z. B. Flachdrähte sein.

Die Halterung 4 weist mehrere zum Rohr gewandte Vorsprünge 41 auf, die um den Umfang des Rohrs im Abstand voneinander verteilt sind. Zwischen dem Messkopf 1, zwei aufeinander folgenden Vorsprüngen und der in dieser Variante im Wesentlichen zylindrischen Mantelfläche der Halterung 4 ist vorzugsweise ein geschlossener Hohlraum oder Luftspalt 3 gebildet. Zwischen dem Messkopf 1 und der Halterung 4 sind mehrere Hohlräume bzw. Luftspalte 3 angeordnet. Solche Hohlräume können mit einem thermisch isolierenden Stoff wie z. B. Schaumstoff zumindest teilweise gefüllt sein.

In Figur 2 ist zu sehen, dass zwischen beiden stirnseitig angeordneten Wänden der Halterung 4 und dem Rohr 2 je eine Dichtung 7 angeordnet ist. Dies ist vorzugsweise ein Gummiring.

Der in Figuren 3A, 3B gezeigte Messkopf 1 umfasst ein Fühlelement 10, zwei Kunststofffolien 11, 12 und Leiterbahnen 14, 15 zur Kontaktierung des Fühlelements 10. Das Fühlelement 10 umfasst Kontakte 101, 102 und eine zwischen diesen angeordnete Thermistorschicht 103.

In Figur 3A ist eine Variante vorgestellt, bei der die Leiterbahnen 14, 15 vor dem Verbinden der Folien 11, 12 an der Oberfläche dieser Folien befestigt sind. Alternativ können sie zunächst am Fühlelement 10 befestigt und dann zusammen mit diesem zwischen den Folien 11, 12 eingeschweißt werden.

In Figur 3B ist ein zwischen den Folien 11, 12 eingeschweißtes Fühlelement 10 in einem Querschnitt senkrecht zur Längsrichtung des Messkopfes 1 gezeigt.

Im Falle von mehreren Fühlelementen 10 sind diese vorzugsweise in Umfangsrichtung aufeinander folgend verteilt.

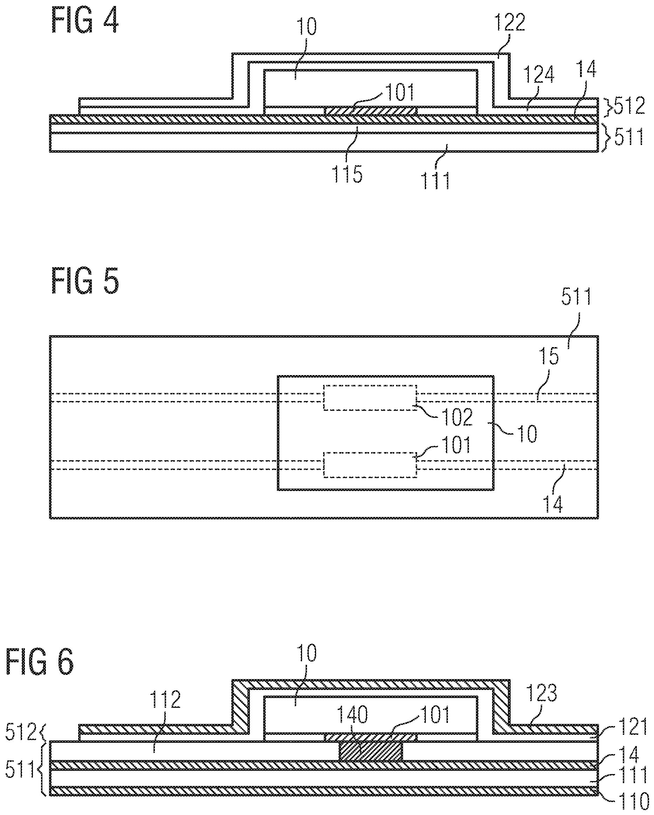

Die Ausführung des Messkopfes und insbesondere die Bedrahtung des Fühlelements 10 kann im Prinzip beliebig sein. In den Figuren 4, 5 und 6 ist ein Fühlelement 10 mit SMD-Kontakten gezeigt, die auf einer Hauptfläche - z. B. Unterseite - des Fühlelements angeordnet sind. In diesem Fall sind die an SMD-Kontakte des Fühlelements angeschlossen Leiterbahnen 14, 15 in einer gemeinsamen Lage angeordnet.

Die in Zusammenhang mit den Figuren 3A, 3B erwähnten Kunststofffolien 11, 12 können durch die nachstehend erläuterten Folienverbunde 511, 512 ersetzt werden.

Die Figuren 4, 5 zeigen verschiedene Ansichten einer Sensoranordnung, die einen ersten Folienverbund 511, eine darauf angeordnete Metallschicht mit darin strukturierten Leiterbahnen 14, 15 und ein Fühlelement 10 mit auf seiner Unterseite angeordneten oberflächenmontierbaren Anschlüssen 101, 102 aufweist. Auf der Rückseite des Fühlelements 10 ist ein zweiter Folienverbund 512 auflaminiert, die auch an den Seitenflächen des Fühlelements anliegt und allseitig dicht mit der Oberseite des ersten Folienverbunds 511 abschließt. Der zweite Folienverbund 512 überdeckt außerdem die elektrisch mit dem Fühlelement 10 verbundenen Leiterbahnen 14, 15.

Der erste Folienverbund 511 umfasst eine dielektrische Schicht, z. B. die Teilschicht 111 in Figur 4, und ist z. B. eine Cu-kaschierte Polyimidfolie, wobei die geätzte Kupferschicht mit der Polyimidfolie z. B. mittels einer in Figur 4 dargestellten Klebeschicht 115 fest verbunden ist. Die Teilschichten 111, 115 und die Leiterbahnen 14, 15 bilden zusammen einen flexiblen Verbund. In einer Variante kann auf die Klebeschicht 115 verzichtet werden.

Der zweite Folienverbund 512 umfasst eine dielektrische Schicht, z. B. die Teilschicht 122 in Figur 4. Auf der Unterseite der Teilschicht 122 ist eine Klebeschicht 124 angeordnet, die die Haftung zwischen der Teilschicht 122 und der Oberseite des ersten Folienverbunds 511 bzw. der zum zweiten Folienverbund 512 gewandten Oberfläche des Fühlelements 10 gewährleistet. Die Teilschichten 122, 124 bilden zusammen einen flexiblen Verbund.

In Figur 4 ist die strukturierte Metallschicht mit den Leiterbahnen 14, 15 auf der Oberseite des ersten Folienverbunds 511 angeordnet. In Figur 6 ist eine Variante vorgestellt, in der die strukturierte Metallschicht zwischen zwei dielektrischen Teilschichten 111 und 112 angeordnet ist. Damit sind die zu dem Fühlelement führenden elektrischen Zuleitungen 14, 15 im Inneren des ersten Folienverbunds 511 verborgen. Die verborgenen Leiterbahnen 14, 15 sind von außen über vertikale elektrische Verbindungen - die Durchkontaktierungen 140 - kontaktierbar. Die Durchkontaktierungen 140 sind fest mit den Außenanschlüssen 101, 102 des Fühlelements 10 verbunden.

In der in Figur 6 gezeigten Variante ist die oberste bzw. nach außen gewandte Teilschicht des zweiten Folienverbunds 512 durch eine elektromagnetisch abschirmende Teilschicht 123, beispielsweise eine Kupferschicht gebildet. Die unterste bzw. nach außen gewandte Teilschicht des ersten Folienverbunds 511 ist durch eine elektromagnetisch abschirmende Teilschicht 110, beispielsweise eine Kupferschicht gebildet.

Die Draufsicht auf die in Figur 4 oder 6 gezeigte Sensoranordnung ist in Figur 5 zu sehen. Die verborgenen Leiterbahnen 14, 15 sowie die Außenanschlüsse 101, 102 des Fühlelements 10 sind durch gestrichelte Linien dargestellt.

Die Ausführung der Sensoranordnung ist auf die vorstehend erläuterten technischen Merkmale oder die in den Figuren gezeigte Form und räumliche Anordnung von Elementen der Sensoranordnung nicht beschränkt. Die Verlötung ist durch eine Schweißverbindung oder eine Steckverbindung ersetzbar, und umgekehrt. Steckergebundene Lösungen zur Durchführung von elektrischen Zuleitungen umfassen standardisierte Gegenstecker.

### Bezugszeichenliste

- 1: Messkopf
- 10: Fühlelement
- 101, 102: Kontakte des Fühlelements
- 103: Thermistorschicht
- 11, 12: Kunststofffolien
- 14, 15: Leiterbahnen
- 2: Rohr
- 3: Luftspalt
- 4: Halterung
- 41: Vorsprünge der Halterung
- 5: Leitungsdurchführung
- 6: Scharniervorrichtung
- 7: Dichtung
- 101, 102: elektrische Anschlüsse des Fühlelements 10
- 110: abschirmende Teilschicht der Folie 11
- 111, 112: dielektrische Teilschicht der Folie 11
- 115: Klebeschicht
- 121: dielektrische Teilschicht der Folie 12
- 123: abschirmende Teilschicht der Folie 12
- 124: Klebeschicht
- 140: Durchkontaktierung
- 511: erster Folienverbund
- 512: zweiter Folienverbund

## Patentansprüche

1. Sensoranordnung für eine Temperaturmessung an einem Rohr mit einem flächigen Messkopf (1) und einer Halterung (4) geeignet das Rohr (2) zu umgreifen, sodass der Messkopf (1) zwischen der Halterung (4) und dem Rohr (2) angeordnet ist,
- wobei der Messkopf (1) einen Verbund aus mindestens zwei flexiblen Kunststofffolien (11, 12) und zumindest ein zwischen diesen angeordnetes Fühlelement (10) umfasst, das zur Temperaturerfassung des Rohrs (2) vorgesehen ist,
- wobei das Fühlelement (10) Kontakte (101, 102) und eine zwischen diesen angeordnete Thermistorschicht (103) umfasst,
- wobei der Messkopf (1) metallische Leiterbahnen (14, 15) umfasst, über die das Fühlelement (10) kontaktierbar ist und die zumindest teilweise zwischen den beiden Kunststofffolien (11, 12) angeordnet sind, und
- wobei der Messkopf (1) geeignet ist, zumindest einen Teil der Rohroberfläche flächig zu berühren und zumindest 20% des Rohrumfangs zu kontaktieren.

2. Sensoranordnung nach Anspruch 1,
- wobei der Messkopf (1) geeignet ist zumindest 50% des Rohrumfangs zu kontaktieren.

3. Sensoranordnung nach Anspruch 1 oder 2,
- wobei der Messkopf (1) geeignet ist, durch die Halterung (4) an das Rohr (2) angedrückt zu werden oder durch Kleben am Rohr befestigt zu werden.

4. Sensoranordnung nach Anspruch 3,
- wobei die Halterung (4) Vorsprünge (41) aufweist, die den Messkopf (1) berühren,
- wobei außerhalb der Vorsprünge liegende Bereiche der Halterung (4) vom Messkopf (1) beabstandet sind.

5. Sensoranordnung nach Anspruch 3 oder 4,
- wobei die Halterung (4) um das Rohr (2) klappbar ist.

6. Sensoranordnung nach einem der Ansprüche 3 bis 5,
- wobei die Halterung (4) eine als Scharnier vorgesehene, zusammendrückbare Ausbeulung (6) aufweist.

7. Sensoranordnung nach einem der Ansprüche 3 bis 6,
- wobei zwischen der Halterung (4) und dem Rohr (2) ein Hohlraum angeordnet ist, in dem der Messkopf (1) angeordnet ist,
- wobei zwischen der Halterung (4) und dem Rohr (2) eine Dichtung zur Abdichtung des Hohlraums angeordnet ist.

8. Sensoranordnung nach einem der Ansprüche 3 bis 7,
- wobei die Halterung (4) zumindest eine Lage aus einem thermoisolierenden Material umfasst.

9. Sensoranordnung nach einem der Ansprüche 3 bis 7,
- wobei die Halterung (4) zumindest eine Lage aus porösem Material umfasst.

## Claims

1. Sensor arrangement for measuring a temperature on a tube, comprising a flat measurement head (1) and a holder (4) suitable for encompassing the tube (2), such that the measurement head (1) is arranged between the holder (4) and the tube (2),
- wherein the measurement head (1) comprises a composite of at least two flexible plastic films (11, 12) and at least one sensing element (10) which is arranged between said plastic films and is provided for detecting the temperature of the tube (2),
- wherein the sensing element (10) comprises contacts (101, 102) and a thermistor layer (103) arranged between said contacts,
- wherein the measurement head (1) comprises metallic conductor tracks (14, 15), via which the sensing element (10) can be contacted and which are arranged at least partially between the two plastic films (11, 12), and
- wherein the measurement head (1) is suitable for areally touching at least part of the tube surface and for contacting at least 20% of the tube circumference.

2. Sensor arrangement according to Claim 1,
- wherein the measurement head (1) is suitable for contacting at least 50% of the tube circumference.

3. Sensor arrangement according to Claim 1 or 2,
- wherein the measurement head (1) is suitable for being pressed by the holder (4) onto the tube (2) or for being fastened to the tube by adhesive bonding.

4. Sensor arrangement according to Claim 3,
- wherein the holder (4) has protrusions (41), which touch the measurement head (1),
- wherein regions of the holder (4) which lie outside the protrusions are spaced apart from the measurement head (1).

5. Sensor arrangement according to Claim 3 or 4,
- wherein the holder (4) can be folded around the tube (2).

6. Sensor arrangement according to one of Claims 3 to 5,
- wherein the holder (4) has a compressible bulge (6) provided as a hinge.

7. Sensor arrangement according to one of Claims 3 to 6,
- wherein a hollow space, in which the measurement head (1) is arranged, is arranged between the holder (4) and the tube (2),
- wherein a seal for sealing off the hollow space is arranged between the holder (4) and the tube (2).

8. Sensor arrangement according to one of Claims 3 to 7,
- wherein the holder (4) comprises at least one layer of a thermally insulating material.

9. Sensor arrangement according to one of Claims 3 to 7,
- wherein the holder (4) comprises at least one layer of porous material.

## Revendications

1. Ensemble de capteur servant à mesurer la température sur un tube et présentant une tête aplatie de mesure (1) et un support (4) qui convient pour entourer le tube (2) de telle sorte que la tête de mesure (1) soit disposée entre le support (4) et le tube (2),
la tête de mesure (1) comportant un ensemble formé d'au moins deux feuilles souples (11, 12) en matière synthétique entre lesquelles est disposé au moins un élément sensible (10) prévu pour saisir la température du tube (2),
l'élément sensible (10) comportant des contacts (101, 102) entre lesquels est disposée une couche (103) de thermistor,
la tête de mesure (1) comportant des pistes métalliques conductrices (14, 15) aptes à assurer le contact avec l'élément sensible (10) et disposées au moins en partie entre les deux feuilles (11, 12) en matière synthétique,
la tête de mesure (1) convenant pour toucher à plat au moins une partie de la surface du tube et à assurer le contact avec au moins 20 % de la périphérie du tube.

2. Ensemble de capteur selon la revendication 1, dans lequel la tête de mesure (1) convient pour être en contact avec au moins 50 % de la périphérie du tube.

3. Ensemble de capteur selon les revendications 1 ou 2, dans lequel la tête de mesure (1) convient pour être repoussée par le support (4) contre le tube (2) ou pour être fixée sur le tube par collage.

4. Ensemble de capteur selon la revendication 3, dans lequel le support (4) présente des saillies (41) en contact avec la tête de mesure (1), les parties du support (4) situées à l'extérieur des saillies étant situées à distance de la tête de mesure (1).

5. Ensemble de capteur selon les revendications 3 ou 4, dans lequel le support (4) peut être rabattu autour du tube (2).

6. Ensemble de capteur selon l'une des revendications 3 à 5, dans lequel le support (4) présente un bombement rabattable (6) prévu comme charnière.

7. Ensemble de capteur selon l'une des revendications 3 à 6, dans lequel une cavité dans laquelle la tête de mesure (1) est disposée est prévue entre le support (4) et le tube (2), un joint d'étanchéité assurant l'étanchéité de la cavité étant disposé entre le support (4) et le tube (2).

8. Ensemble de capteur selon l'une des revendications 3 à 7, dans lequel le support (4) comporte au moins une couche d'un matériau thermiquement isolant.

9. Ensemble de capteur selon l'une des revendications 3 à 7, dans lequel le support (4) comporte au moins une couche d'un matériau poreux.
